# EUROPEAN PATENT APPLICATION

(11) **EP 4 512 511 A1**
(43) Date of publication of application: **26.02.2025**
(21) Application number: 22938673.5
(22) Date of filing: 03.10.2022
(51) Int. Cl.: B01D 61/16, B01D 61/18, C02F 1/78, C02F 101/30

(54) **METHOD FOR PURIFYING WATER CONTAINING ORGANIC IMPURITIES BY ULTRAFILTRATION**

(30) Priority: 18.04.2022 RU 2022110402
(71) Applicant: Sailer, Paul, 6100 Seefeld in Tirol (AT); Piljanovic, Mario, 6100 Seefeld in Tirol (AT)
(72) Inventor: TATEOSOV, Dmitrii Valer'evich, d. Gubkino, 143006 (RU)
(74) Representative: Torggler & Hofmann Patentanwälte - Innsbruck
(86) International application number: PCT/RU2022/000299
(87) International publication number: WO 2023/204727

(57) **Abstract**

The invention relates to methods and devices for purifying water containing organic contaminants. The technical result of the invention is a reduction in the level of contamination of the surface of ultrafiltration membranes. This technical result is achieved by a method of purifying water containing organic impurities by ultrafiltration, which consists in the preparation of water, including ozonization and mixing by means of recirculation in a contact tank, in addition to the ultrafiltration process itself. Water is fed into an ultrafiltration device simultaneously with an ozone mixture via an ejector, with a second recirculation cycle being organized at the same time. In a space adjacent the membrane of the ultrafiltration device, a high-speed gas-liquid

## Description

### Field of invention

The invention relates to the field of water purification as well as methods and devices for water purification using the ultrafiltration technique and is intended primarily for purification of water with organic impurities.

### Description of the Related Art

Currently, many methods and devices are known for purification of water for specific target needs, which allow a desired degree of purification to be achieved. In many cases, this problem can be effectively solved by using the ultrafiltration technique [1].

It is often appropriate to simultaneously carry out disinfection before ultrafiltration of water and/or at primary steps of its processing, which in many cases is carried out by ozonation. For example, a water purification unit is known which includes ultrafiltration devices with membrane ceramic elements, an ozonizer, an ejector and a mixing chamber. These devices are used to purify water by feeding it simultaneously with an ozone mixture into a mixing chamber and then into two ultrafiltration devices installed sequentially [2]. However, if organic impurities are present in the water (and they are almost always present), they are oxidized by ozone to form viscous reaction products (slime) which pollute or coat the membrane surfaces, clog the pores and reduce filtration efficiency.

In terms of the essential feature set, the closest prototype of the present disclosure is a method of purifying water with organic impurities by ultrafiltration, consisting of preliminary preparation of water for ultrafiltration,

consisting of preliminary purification, for example, on a mesh filter, ozonation with simultaneous mixing by the recirculation in a contact tank, as well as the process of the ultrafiltration itself [3]. Said method is carried out using a device containing a preliminary purification device, a water-jet ejector, a contact tank, an ultrafiltration device which are sequentially arranged into a single technological chain. The disadvantages of the method and, accordingly, the device for its implementation are contamination of the membrane surfaces with oxidation products of organic impurities and, as a result, a decrease in their filtering capacity that lead to a necessity in additional cleaning measures or a restoration of membranes' performance.

### Problem to be solved and technical result to be achieved

The problem to be solved by the claimed invention is to eliminate the disadvantages of the above mentioned technical solution and to achieve a technical result in terms of reducing a degree of contamination of the ultrafiltration membrane surfaces with oxidation products of organic and organochlorine impurities (organic impurities or organics), which leads to an increase in the efficiency of water purification and a decrease in the number of membrane cleaning measures. In addition, the expansion of a range of technical means for the methods of purification of water with organic impurities by ultrafiltration as well as devices for the implementation thereof should also be considered as a technical result.

### Disclosure of the invention

Said technical result of the claimed invention is achieved by implementing a method of purifying water with organic impurities by ultrafiltration, consisting of preliminary preparation of water for ultrafiltration, consisting of ozonation and mixing by recirculation in a contact tank, as well as the process of the ultrafiltration itself through membranes. Along with that, water is fed into the ultrafiltration device simultaneously with feeding of an ozone-air or ozone-oxygen mixture through at least one water-jet ejector, a second recirculation cycle is set up through the ultrafiltration device into the contact tank and back into the ultrafiltration device, a high-speed and/or turbulent mode of a gas-liquid flow is established in the near-membrane space of the ultrafiltration device with a water-bubble flow over the membrane surface, wherein the water flow rate through the water-jet ejector is established in the range from 0.5 to 45 m³/hr, the ozone-air or ozone-oxygen mixture flow rate is established in the range from 0.3 to 30 m³/hr, as well as the pressure in the ejector pressure line is established in the range from 0.2 to 1.6 MPa.

For a clear and more thorough understanding of the description of the present disclosure, the details and disclosures of the concepts and terms used above, as well as a description of the method, are provided below.

In the process of water purification using ultrafiltration, preliminary preparation of water is first carried out, the purpose of which is mainly to purify it from coarse mechanical impurities and reduce an amount of other impurities, including homogeneous ones, which allows subsequent ultrafiltration with greater efficiency. The preliminary preparation is carried out, for example, by filtration through mechanical filters, chemical treatment, oxidation, settling. These procedures can be carried out in diverse variants and orders. Among them, the ozone oxidation with simultaneous mixing should be emphasized which allows the oxidation of organic impurities in water and renders them into a colloidal viscous (slime-like) state. In this state, these impurities can already be separated. In addition, ozonation solves the problem of disinfection from bacteria and viruses.

As practice shows, the most effective method of ozonation is feeding of ozone mixture to the volume of water being treated through a water-jet ejector (ejector). The water to be treated with ozone is usually in a contact tank. Other known methods of ozonation, parallel feeding of gas and liquid components or bubbling, are less effective, although possible. Ozone-air or ozone-oxygen mixtures are usually used as ozone mixtures, depending on a degree of water pollution and the volume of water. In addition, the use of an ejector allows to adjust the direction of the jet, the flow rate, and the gas-liquid ratio. Greater efficiency of ozonation can be achieved by using the recycling technique through a contact tank according to the scheme: outlet from the tank - inlet to the tank. To perform recycling, a pipeline, external to the contact tank, is arranged. As a result of water ozonation in the tank, products of organics oxidation are already formed in it. However, the full oxidation of organic impurities in the water typically cannot be achieved in the contact tank. In the present disclosure, the water-jet ejector is intended to be an ejector wherein the pressure line is implemented by pumping water, while an ozone gas mixture is fed through a suction line. The suction line is configured on the side of the pressure line. This line is connected to the receiving chamber of the ejector, in which a vacuum is generated by the high-speed water flow of the ejector's pressure line. Due to this vacuum, the ozone gas mixture is sucked in and then mixed with water.

The water treated by ozone in the contact tank, together with the oxidation products of organic impurities, is fed into the ultrafiltration device (ultrafiltration module). This water enters the inlet section (receiving chamber) of the ultrafiltration device through the ejector, which is a device for the inlet of filtered water into the inlet section of the ultrafiltration device. At the same time, the ozone mixture is again fed through the suction branch pipe of the ejector. Advantageously, the ejector is configured adjustable, i.e. with the ability to regulate the rate of the pressure water flow and the flow of the sucked ozone mixture, as well as the pressure in the receiving chamber. In some cases, it is possible to configure an ejector with two suction pipes for introducing additional components. For design and technological reasons, water can be supplied into the ultrafiltration device using a group of ejectors. One of the advantages of this approach is the increased ozonation of water, as well as the filtration rate.

In the receiving chamber of the ultrafiltration device, additional oxidation of organic impurities occurs. This can be facilitated by the turbulent mode of filtered water, formed at the outlet of the ejector, which is achieved by increasing the pressure of the pumping flow. Thus, in the receiving chamber, the products of organic oxidation formed in the contact tank and in the receiving chamber of the ultrafiltration device accumulate, which complicates the filtration process. For this reason, a drain line is set up from the receiving chamber of the ultrafiltration device (filter) with a connection to the contact tank. As a result, a second recirculation line is provided according to the scheme: outlet from the receiving chamber of the filter - inlet to the contact tank and then through the contact tank to the ejector at the inlet to the filter. Furter, in some cases it is appropriate to install a trap for products of organics oxidation and/or a drain in a technologically determined point in this line. In particular, it is appropriate to employ this in the case of small volumes of the receiving chamber of the ultrafiltration device. All lines of the technological process, inlets and outlets to its devices are equipped with shut-off and control valves. Approximate conditions for the filtration through ultramembranes are as follows: differential pressure is from 0.05 to 0.6 MPa, flow rate of the ozone-air mixture through the ejector is from 0.3 to 30 m³/hr, dissolved ozone content in water is from 0.01 to 1.0 g/m3, degree of water purification is up to 92%.

It is known that in an alkaline conditions, oxidation of organic impurities occurs more completely, therefore, to implement this feature, it is appropriate to create an alkaline conditions in the receiving chamber [4]. For this purpose, catholyte from an external electrolyzer can be introduced into the receiving chamber of the ultrafiltration device to obtain conditions with a pH of 8.0 to 11.0.

A challenging problem with filtration efficiency of an ultrafiltration device is a contamination of the ultrafiltration membrane surfaces with viscous products of organics oxidation, which are predominantly colloidal species. These products stick to the membrane surfaces and clog the pores, thus preventing filtration. It is known from practice that the sticking of viscous products to membranes is prevented by providing a high-speed and/or turbulent mode of liquid flow in the filter receiving chamber due to mechanical knocking off these products by flow of liquid. This process is significantly enhanced in the case of on-purpose generation of a bubble mode in said flows, i.e. generation a significant number of bubbles in the flow of water to be filtered or formation a water-bubble flow. Moreover, the generation of such mode is necessary foremost in the near-membrane space, i.e. in the space adjacent to the membrane surfaces. As a result, a gas-liquid flow is formed wherein the gas is in the form of multiple bubbles that knock off viscous slime on the membrane surfaces together with the simultaneous effect of a high-speed water flow. The efficiency of cleaning the membranes from sticking viscous products of organics oxidation by knocking off them along with a water-bubble flow around the membrane surface has been proven in practice. This bubble mode effective of knocking off viscous products of organics oxidation from the surface of ultrafiltration membranes is achieved by using a water-jet ejector with the following parameters: the water flow through the water-jet ejector is from 0.5 to 45 m³/hr, the flow rate of an ozone-air or ozone-oxygen mixture is from 0.3 to 30 m³/hr, the ratio between the nozzle diameter of the suction flow and the nozzle diameter of the pressure water flow is from 0.35 to 1.0, the pressure in the ejector pressure line is varied in the range from 0.2 to 1.6 MPa, the vacuum in the receiving chamber of the water-jet ejector relative to the atmospheric pressure is in the range from 0.03 to 0.098 MPa. An even greater increase in the cleaning efficiency can be achieved by using a group of ejectors placed in optimal points. Such points, for example, are the location between tubular membranes or the direction corresponding to the flow around membrane surface.

Efficient water-bubble flow around membrane surfaces is achieved by optimal placement of the ejector, as well as by furter providing of separators and flow guides that direct the water-bubble flow toward to the membrane surface, while controlling the flow rate.

The efficiency of membrane surface cleaning is also increased by using oxide-based ceramic materials, for example, silicon and titanium oxides. This can be explained by the low physico-chemical affinity of products of organics oxidation to these oxides, which follows from practice of using the ceramic ultrafiltration membranes.

The design of the contact tank is a chamber with inlets for the feed water and ejector, as well as the second recycling line, the tank also contains an outlet into the pipeline toward to the ultrafiltration device. The ultrafiltration device is a tank, advantageously cylindrical, inside which tubular membranes made from titanium and silicon oxides are arranged. The membrane pore sizes are from 0.001 to 0.1 µm. The total filtering surface of the membranes is from 0.15 to 2 m² for one tubular membrane or up to 24 m² for the entire device, which is configured advantageously with 12 membranes. The filtration device chamber has partitions, which, together with the membranes, divide its volume to a receiving chamber and a filtrate compartment. This chamber has inlets for arranging an ejector and two outlets for connecting with the second recycling pipeline and the filtrate outlet pipeline. If more than one ejector is used, then the chamber has a corresponding number of inlets. Said designs and design elements can be made of stainless steel and polymeric, as well as composite materials.

Distinctive from the closest technical solution, essential features of the claimed invention or characteristics thereof are:
- feeding of water into the ultrafiltration device simultaneously with feeding of ozone-air or ozone-oxygen mixture through at least one water-jet ejector,
- providing the second recirculation cycle through the ultrafiltration device and the contact tank,
- providing a high-speed and/or turbulent gas-liquid mode in the near-membrane space with a water-bubble flow around the membrane surface wherein providing the following gas-liquid modes:
   -- the water flow rate through the water-jet ejector is from 0.5 to 45 m³/hr,
   -- the ozone-air or ozone-oxygen mixture flow rate is from 0.3 to 30 m³/hr,
   -- the pressure in the receiving chamber of the water-jet ejector is in the range from 0.2 to 1.6 MPa.

The above mentioned essential features are distinctive from the closest technical solution, since each of them is not comprised in the set of prototype essential features, i.e. is not present in the list of features provided in the prototype, and is not a characteristic thereof. As has been shown above, said essential features distinctive from the prototype, including characteristics thereof, provide the achievement of the claimed technical result when using other essential features of the invention specified in the description.

Thus, it is shown that the set of essential features of the claimed invention, which allows achieving the declared technical result, differs from the set of essential features of analogues, the prototype, as well as other known sources of data, i.e. the use of said set of essential features to obtain the claimed technical result is not known. In other words, the claimed invention is not known from the prior art.

In the course of searching for the methods of purifying water with organic impurities by ultrafiltration in the prior art, as well as for devices for the implementation thereof, no technical solutions were identified, which essential features, individually or in any combination, coincide with the distinctive essential features of the claimed invention and allow to achieve the claimed technical result. Thus, the absence of knowledge of the effect of the distinctive essential features of the claimed invention on the claimed technical result is confirmed.

It should also be noted that the use of the entire claimed set of essential features including the set of distinctive features to obtain the claimed technical result is not obvious for skilled artisans from the prior art since it is not a combination, change or combined use of information comprised in the prior art and/or the general knowledge of skilled artisan.

Indeed, a decrease in the degree of contamination of the surface of ultrafiltration membranes with oxidation products of organic impurities due to knocking off these products from the surface of ultrafiltration membranes by a water-bubble flow which in turn leads to an increase in the efficiency of water purification and a decrease in the number of membrane cleaning measures, is not obvious for skilled artisans from the prior art due to the use of the above mentioned distinctive essential features.

In relation to the confirmed achievement of the declared technical result said technical solutions are non-standard and unknown solutions. In addition, these solutions or these combinations of essential features should be considered along with the use of other essential features, specified in the claims, in a single set.

An increase in the efficiency of the technical result of the claimed method is achieved in the following modifications of the method, characterizing particular cases of its implementation:
1. The above-described method of purifying water with organic impurities by ultrafiltration technique, characterized in that the alkaline conditions are generated in the receiving chamber of the ultrafiltration device with the pH range of 8.0 to 11.0 by feeding catholyte from an external electrolyzer.
2. The above-described method of purifying water with organic impurities by ultrafiltration technique, characterized in that the filtration in the ultrafiltration device is carried out through ultrafiltration membranes made from a mixture of oxide materials based on titanium oxide and silicon oxide.
3. The above-described method of purifying water with organic impurities by the ultrafiltration technique, characterized in that the pressure in the receiving chamber of the water-jet ejector is in the range from 0.03 to 0.098
MPa.

The above-described method of purifying water with organic impurities by ultrafiltration involves the providing of a device, the design elements of which were described above along with the description of said method, namely: a device for purifying water with organic impurities by ultrafiltration, comprising an ozonation device, a contact tank, a recycling line and the ultrafiltration device itself. In addition, the device comprises an additional recycling line from the ultrafiltration device with a return through the contact tank, as well as an additional ozonation device (additional devices) at the inlet(s) to the ultrafiltration device in the form of at least one water-jet ejector, in which the ratio between the working diameter of the suction nozzle and the working diameter of the pressure line nozzle is in the range from 0.35 to 1.0, wherein said nozzles provide an ability to establish the flow rate of ozone-air or ozone-oxygen mixture for each ejector in the range from 0.3 to 30 m³/hr and the flow rate of water in the range from 0.5 to 45 m³/hr, which provides the possibility to generate a water-bubble flow in the filter receiving chamber around the surface of the membranes.

An increase in the efficiency of the technical result of the claimed device is achieved in the following modifications of the method, characterizing particular embodiments thereof:
1. The above-described device for purifying water with organic impurities by the ultrafiltration technique, characterized in that the catholyte supply line is provided from an external electrolyzer to the receiving chamber of the ultrafiltration device to generate alkaline conditions in the water to be filtered.
2. The above-described device for purifying water with organic impurities by the ultrafiltration technique, characterized in that the ultrafiltration membranes in the ultrafiltration device are made from a mixture of oxide materials based on titanium and silicon oxides.

### Brief description of the drawings

The description of the claimed method is explained by a diagram, which shows the following designations of its processes:
1 - disinfection of source water by ozonation in a contact tank,
2 - mixing by recirculation (primary recirculation),
21 - inlet of the secondary recirculation line,
3 - ultrafiltration,
31 - water feed through a water-jet ejector,
32 - ozone mixture feed through an ejector,
33 - input of additional components,
34 - outlet of the secondary recirculation line,
35 - separation of oxidation products of organic impurities using a special trap,
36 - outlet of the filtrate line,
4 - ultrafiltration device,
41 - ultrafiltration tubular membrane,
42 - water-bubble flow,
43 - oxidation products of organic impurities.

### Embodiments of the invention

The claimed invention "Method of water purification with organic impurities by ultrafiltration and device for implementation thereof" is implemented as follows.

In general, the implementation of the method begins with cleaning from coarse impurities on filters or mechanical cleaning devices. After this, the water is fed into a contact tank, where it is ozonized **1** for the purpose of oxidizing of organic impurities and disinfecting with simultaneous mixing by recirculation **2** according to the scheme: outlet from the tank - inlet to the tank. The water treated with ozone is fed into the ultrafiltration device for further purification (ultrafiltration step) **3.** Water is fed to the ultrafiltration device through a water-jet ejector **31.** At the same time, the ozone-air or ozone-oxygen mixture **32** is fed through the ejector. Moreover, additional components **33** can be fed through an additional ejector branch pipe or another device. Part of the filtered water is diverted from the receiving chamber of the device into a contact tank, thus implementing a second recirculation line **34** according to the scheme: outlet from the filter receiving chamber - inlet to the contact tank and then through the contact tank to the ejector at the filter inlet. At the recirculation line, separation of oxidation products of organic impurities is configured using a special trap **35.** A filtrate line **36** is led from the filtrate compartment of the ultrafiltration device. Ultrafiltration is carried out through the tubular ceramic membranes **4** with pore sizes from 0.01 to 0.1 um. To maintain effective filtration in the near-membrane space **41,** the directed water-bubble flow **42** is established, which knocks off the oxidation products of organic impurities **43** from the membrane surfaces. The approximate conditions for the filtration through ultrafiltration membranes are as follows: the differential pressure is from 0.05 to 0.6 MPa, the flow rate of ozone-air mixture through the ejector is from 0.3 to 30 m³/hr, the dissolved ozone content in water is from 0.01 to 1.0 g/m3, the degree of water purification is up to 92%. The total filtering surface of the membranes is from 0.15 to 2 m² (up to 24 m² for the entire ultrafiltration device).

The described method and device operate as follows.

The water to be purified is first passed through a mechanical filter and then fed into a contact tank for ozonation. Ozonation is carried out either by bubbling through a layer of water or by means of a water-jet ejector installed at the entrance to the tank. At the same time, the water in the contact tank is mixed with the ozone mixture by recycling through an external circuit according to the scheme: outlet from the tank - inlet to the tank. The water ozonized in this way is fed into the ultrafiltration device. At the entrance to this device, a water-jet ejector is provided with which additional ozonation of water with an ozone-air or ozone-oxygen mixture is carried out. Moreover, a high-speed water-bubble flow around the membrane surface is achieved by regulating the flow rate of water and gas flows which knocks off viscous oxidation products of organic impurities from the membrane surface. A portion of the liquid is withdrawn from the receiving chamber to be fed into the contact tank, thereby implementing the second recycling line. A trap is installed in this line to separate the oxidation products of organic impurities, which are periodically drained, i.e. removed from the process chain. The generation of the water-bubble flow is monitored by visual observation through a special transparent window or based upon the structure of the flow through the trap. Additional components, such as catholyte, can also be introduced into the receiving chamber. The water that has passed through the membrane is collected in the filtrate compartment and discharched through a separate line.

### Example 1

The raw water had the following characteristics: iron content was 1.5 mg/dm³, manganese content was from 0.3 mg/dm³, oil products were 0.1 mg/dm³, ammonia was 2.5 mg/dm³, permanganate oxidizability was from 6 mg O₂/dm3, the presence of traces of chlorine and organochlorine compounds.

Said water was fed into a 400 L contact tank, where the ozone-air mixture with the ozone content of 8 mg/l was bubbled through it. From the tank, the ozonized water was fed into the ultrafiltration device. At the same time, a portion of the flow was withdrawn from the tank outlet and sent through an external pipeline back to the tank inlet, thus performing the mixing. The water consumption was 2 m³/hr. The differential pressure of filtration through the membranes was 0.2 MPa, the filtration surface of the membranes was 2.0 m². At the filter outlet, the water had the following characteristics: iron content was 0.2 mg/dm³, manganese content was from 0.1 mg/dm³, oil products were 0.01 mg/dm³, ammonia 1.6 mg/dm³, permanganate oxidizability was from 4 mg O₂/dm3, no traces of chlorine and organochlorine compounds.

To maintain constant purification parameters, the inlet section of the ultrafiltration device and its membranes are cleaned once a week. The vacuum in the receiving chamber of the water-jet ejector relative to atmospheric pressure is in the range from 0.03 to 0.098 MPa.

### Example 2

The raw water characteristics were similar to those specified in example 1. Water purification was also carried out using the method specified in the Example 1. However, in addition to this, a portion of the filtered water was diverted from the receiving chamber back to the contact tank through a separate pipeline, implementing a second recirculation loop. Viscous products of organics oxidation were periodically drained from the trap. In the receiving chamber, a water-bubble flow was carried out in a near-membrane layer to clean the surface of the membranes, which was monitored by visual observations through a special transparent window. The water-bubble mode was carried out by maintaining the following characteristics: the water flow rate was 0.5 m³/hr, the ozone-air mixture flow rate was 0.3 m³/hr, wherein the suction nozzle diameter was 3 mm, and the pressure nozzle diameter was 3 mm, the vacuum in the receiving chamber of the water-jet ejector relative to atmospheric pressure was 0.03 MPa, the content of dissolved ozone in water was 0.01 g/m3, the differential filtration pressure through the membranes was 0.05 MPa, the membrane filtration surface was 0.15 m² (for one tubular membrane). At the outlet of the filter, the water had the following characteristics: iron content was 0.01 mg/dm³, manganese content was from 0.01 mg/dm³, oil products were 0.01 mg/dm³, ammonia was 0.5 mg/dm³, permanganate oxidizability was from 1 mg O₂/dm³, no traces of chlorine and organochlorine compounds.

To maintain constant cleaning parameters, the inlet section of the ultrafiltration device and its membranes are cleaned once every 4 months.

### Example 3

The raw water characteristics were similar to those specified in Example 1. Water purification was also carried out using the method specified in the Example 1. However, in addition to this, a portion of the filtered water was diverted from the receiving chamber back to the contact tank through a separate pipeline, implementing a second recirculation loop. A trap was installed in this line to separate the oxidation products of organic impurities. Viscos products of organics oxidation were periodically drained from the trap. In the receiving chamber, a water-bubble flow was carried out in the near-membrane layer, cleaning the surface of the membranes, which was monitored by visual observations through a special transparent window. The water-bubble mode was carried out by maintaining the following characteristics: the water flow rate was 45 m³/hr, the ozone-air mixture flow rate was 30 m³/hr, wherein the suction nozzle diameter was 20 mm, and the pressure nozzle diameter was 56 mm, the vacuum in the receiving chamber of the water-jet ejector relative to atmospheric pressure was 0.098 MPa, the differential filtration pressure through the membranes was 0.6 MPa, the membrane filtration surface was 24 m² (for 12 tubular membranes) . Water was fed through a group of ejectors in the number of 6.

At the outlet of the filter, the water had the following characteristics: iron content was 0.02 mg/dm³, manganese content was from 0.03 mg/dm³, oil products were 0.01 mg/dm3, ammonia was 0.6 mg/dm³, permanganate oxidizability was from 1.5 mg O₂/dm³, no traces of chlorine and organochlorine compounds.

To maintain constant cleaning parameters, the inlet section of the ultrafiltration device and its membranes are cleaned once every 4 months.

### Example 4

The raw water had the following characteristics: iron content was 15 mg/dm³, manganese content was from 1 mg/dm³, oil products were 0.5 mg/dm³, ammonia was 7 mg/dm³, permanganate oxidizability was from 10 mg O₂/dm³, presence of traces of chlorine and organochlorine compounds.

Water purification was also carried out according to the method specified in example 2. However, in addition to this, a portion of the purified water was passed through an electrolyzer, and catholyte was fed into the contact tank through a separate pipeline, which increased the pH to 8.5. In the receiving chamber, a water-bubble flow was carried out in the near-membrane layer, cleaning the surface of the membranes, which was monitored by visual observations through a special transparent window. The water-bubble mode was carried out by maintaining the following characteristics: the water flow rate was 3 m³/hr, the ozone-air mixture flow rate was 1 m³/hr, wherein the suction nozzle diameter was 6 mm, and the pressure nozzle diameter was 8 mm, the vacuum in the receiving chamber of the water-jet ejector relative to atmospheric pressure was 0.05 MPa, the differential filtration pressure through the membranes was 0.2 MPa, and the membrane filtration surface was 1 m².

At the filter outlet, the water had the following characteristics: iron content was 0.01 mg/dm³, manganese content was from 0.01 mg/dm³, oil products were 0.01 mg/dm³, ammonia was 0.3 mg/dm³, permanganate oxidizability was from 1.5 mg O₂/dm³, no traces of chlorine and organochlorine compounds. To maintain constant cleaning parameters, the inlet section of the ultrafiltration device and its membranes are cleaned once every 5 months.

The above examples should not be considered as limiting the scope of the invention. On the contrary, variations, modifications and equivalents of the described examples are also possible within the scope of protection set forth in the claims below.

### Industrial applicability of the invention and achievement of the technical result

The claimed invention is a technical solution, since it is a solution to the problem of achieving the declared technical result by implementing a method consisting in performing actions on material objects using material means. In this case, the material objects are water, ozone gas mixtures. The following actions are performed on these material objects: water feeding, water treatment with ozone, water purification by filtration, flow separation, regulation of the feeding and consumption of water and ozone mixtures. All actions on said material objects are performed on time and in a certain sequence. At the same time, the set of said actions and essential features of the present invention are technologically and functionally interconnected and united by a single creative concept.

The technical solution is industrially applicable in various areas of the national economy wherein highly purified water is required, particularly in medicine, various fields of chemistry, and food industry. The implementation of the claimed technical solution can be performed by persons skilled in the art. In the implementation of the method for obtaining and selling alkaline water, commercially made and available devices, instruments and materials are used. The techniques for implementing the technological process of the invention are techniques of mechanical processing of metal and plastics, electric welding and thermal welding of plastics, metalworking, mounting. The means of implementation are mechanical means, machine tools and hand tools for mechanical processing, welding equipment.

The above mentioned set of essential features of the claimed invention and their disclosure allows to conclude that the claimed technical result has been achieved, which consists in reducing the degree of contamination of the surface of ultrafiltration membranes with oxidation products of organic impurities by knocking off these products from the surface of ultrafiltration membranes by water-bubble flow, which leads to an increase in the efficiency of water purification and a decrease in the number of membrane cleaning measures.

In addition, the technical result should also be considered to be an expansion of a range of technical means for the methods of purification of water with organic impurities by ultrafiltration, as well as devices for its implementation.

The above description of the implementation of the invention and examples of the embodiments thereof confirm the achievement of the claimed technical result in the process of implementing the invention. They also show the cause and effect relationship of the essential features between themselves and the technical result achieved.

It also follows from the above description that the achievement of the technical result is possible only with the implementation of the entire set of essential features, which also confirms the technical solution to the problem of implementing the invention.

References
1. 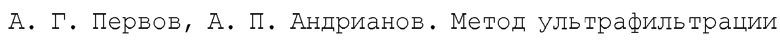 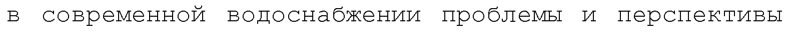 . [web] https://aquasorbent.ru/articles/1-metod-ultrafiltratsii-v-sovremennom-vodosnabjenii-problemyi-i-perspektivyi (access date 12 April 2022).
2. 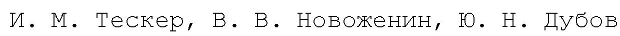 . RU Patent No. 2155165, IPC C02F 9/00, 16 February 2000.
3. 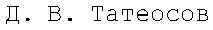 . RU Patent No. 2668036, IPC C02F 1/78, C02F 9/08, 14 February 2017.
4. 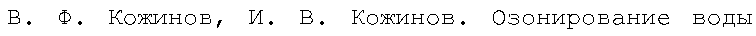 . [web] URL: https://helpiks.org/2-71562.html (access date 25 March 2022).

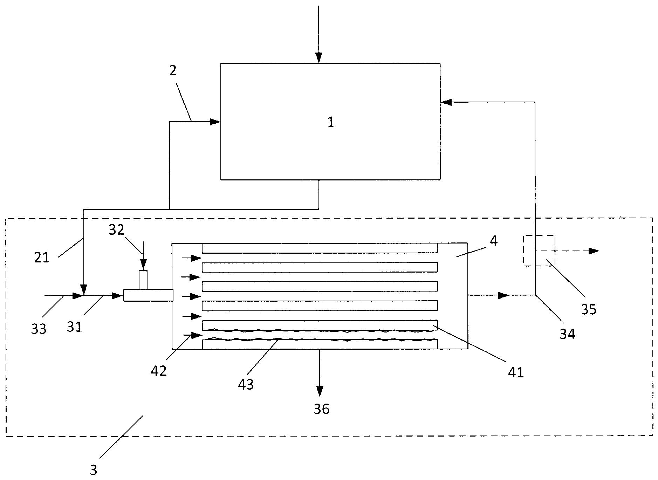

## Claims

1. A method of purifying water with organic impurities by ultrafiltration technique, consisting of preliminary preparation of water for the ultrafiltration, consisting of ozonation and mixing by recirculation in a contact tank, as well as the process of the ultrafiltration through membranes itself, **characterized in that** water is fed into the ultrafiltration device simultaneously with feeding of an ozone-air or ozone-oxygen mixture through at least one water-jet ejector, a second recirculation loop is provided through the ultrafiltration device into the contact tank and back into the ultrafiltration device, a high-speed and/or turbulent gas-liquid mode is carried out in the near-membrane space of the ultrafiltration device with a water-bubble flow around the membrane surface, wherein the water flow rate through the water-jet ejector is established in the range from 0.5 to 45 m³/hr, the ozone-air or ozone-oxygen mixture flow rate is established in the range from 0.3 to 30 m³/hr, as well as pressure in the ejector pressure line is established in the range from 0.2 to 1.6 MPa.

2. The method according to Claim 1, **characterized in that** alkaline conditions are generated in the receiving chamber of the ultrafiltration device in the pH range of 8.0 to 11.0 by introducing catholyte from an electrolyzer external to the ultrafiltration device.

3. The method according to Claim 1, **characterized in that** the filtration in the ultrafiltration device is carried out through ultrafiltration membranes made of a mixture of oxide materials based on titanium oxide and silicon oxide.

4. The method according to Claim 1, **characterized in that** the vacuum in the receiving chamber of the water-jet ejector relative to atmospheric pressure is in the range from 0.03 to 0.098 MPa.

5. A device for purifying water with organic impurities by ultrafiltration technique, comprising an ozonation device, a contact tank, a recycling line and ultrafiltration device itself, **characterized in that** it comprises an additional recycling line from the ultrafiltration device with a return through the contact tank, as well as an additional ozonation device (additional devices) at the inlet(s) to the ultrafiltration device in the form of at least one water-jet ejector, in which the ratio between the working diameter of the suction nozzle and the working diameter of the pressure line nozzle is in the range from 0.35 to 1.0, wherein said nozzles provide the ability to establish the flow rate of an ozone-air or ozone-oxygen mixture for each ejector in the range from 0.3 to 30 m³/hr, and the flow rate of water in the range from 0.5 to 45 m³/hr, which provides the possibility to generate a water-bubble flow in the filter receiving chamber around the surface of the membranes.

6. The device according to Claim 1, **characterized in that** a catholyte supply line is provided from an external electrolyzer to the receiving chamber of the ultrafiltration device to generate alkaline conditions in the water to be filtered.

7. The device according to Claim 1, **characterized in that** the ultrafiltration membranes in the ultrafiltration device are made from a mixture of oxide materials based on titanium and silicon oxides.
